(19) **Europäisches Patentamt / European Patent Office / Office européen des brevets**

(11) **EP 1 775 786 B1**

(12) **FASCICULE DE BREVET EUROPEEN**

(45) Date de publication et mention
de la délivrance du brevet:
**08.09.2010 Bulletin 2010/36**

(51) Int Cl.:
*H01M 4/48* (2010.01)   *H01M 4/58* (2010.01)
*H01M 4/62* (2006.01)   *H01M 4/04* (2006.01)

(21) Numéro de dépôt: **06023645.2**

(22) Date de dépôt: **10.07.2003**

(54) **Particules comportant un noyau non conducteur ou semi conducteur enrobées par une couche conductrice hybride, leurs procédés d'obtention et leurs utilisations dans des dispositifs electriques**

Aus nichtleitenden oder halbleitenden Kernen bestehende Partikel, die mit einer leitenden Hybridschicht beschichtet sind, sowie deren Herstellungsverfahren und Verwendungen in elektrochemischen Vorrichtungen

Particles comprising a non-conducting or semi-conducting core, which are coated with a hybrid conducting layer, production methods thereof and uses of same in electrical devices

(84) Etats contractants désignés:
**AT BE BG CH CY CZ DE DK EE ES FI FR GB GR HU IE IT LI LU MC NL PT RO SE SI SK TR**

(30) Priorité: **12.07.2002 CA 2394056**

(43) Date de publication de la demande:
**18.04.2007 Bulletin 2007/16**

(62) Numéro(s) de document de la (des) demande(s) initiale(s) en application de l'article 76 CBE:
**03763538.0 / 1 520 309**

(73) Titulaire: **HYDRO-QUEBEC**
**Montréal,**
**Québec H2Z 1A4 (CA)**

(72) Inventeurs:
• **Zaghib, Karim**
**Longueuil, Québec J4M 2M7 (CA)**
• **Charest, Patrick**
**Sainte-Julie, Québec J3E 1P2 (CA)**
• **Guerfi, Abdelbast**
**Brossard, Québec J4X 1W2 (CA)**
• **Perrier, Michel**
**Montréal, Québec H1T 3H8 (CA)**
• **Kinoshita, Kimio**
**Cupertino, CA 95014 (US)**

(74) Mandataire: **Sueur, Yvette et al**
**Cabinet Sueur & L'Helgoualch**
**Le Centralis**
**63, avenue du Général Leclerc**
**92340 Bourg-la-Reine (FR)**

(56) Documents cités:
EP-A- 1 049 182    EP-A- 1 261 050
WO-A-01/97303     WO-A-02/27823
WO-A-02/46101     WO-A-03/078326
US-A- 5 521 026    US-A- 5 789 114

• DR J STEIN AND AL: "Mechanofusion for high performance particles" PROCESS ENGINEERING, LONDON, GB, vol. 79, no. 4, janvier 2002 (2002-01), pages E11-E15, XP002315531

**Description**

## DOMAINE DE L'INVENTION

La présente invention est relative à des mélanges de particules comportant un noyau non-conducteur ou semi-conducteur et un enrobage hybride conducteur ainsi qu'une connexion de chaînes conductrices hybrides.

La présente invention est également relative à des procédés permettant la préparation de ces particules et à leur utilisation notamment dans le domaine des dispositifs électrochimiques tels que les générateurs électrochimiques rechargeables.

Un objet de la présente invention est également constitué par les anodes et les cathodes comportant de telles particules et par les systèmes électrochimiques, notamment les supercapaciteurs ainsi obtenus.

## ÉTAT DE LA TECHNIOUE:

La Société Hydro-Québec qui est à l'origine du brevet US-A-5.521.026 est l'un des pionniers dans le domaine des co-broyages de carbone avec les oxydes. Dans ce document, le co-broyage d'un carbone en présence de solvant est décrit comme pouvant être utilisé pour préparer des matériaux augmentant la conductivité électrique des cathodes pour les batteries lithium polymère. Ainsi, l'oxyde de type Vox est co-broyé avec du noir de carbone.

Dans la demande de brevet PCT publiée sous le numéro WO 02/46101 A2, la synthèse du matériau $Li_4Ti_5O_{12}$ est décrite comme pouvant être réalisée en présence du carbone. Dans ce cas, le rôle du carbone est principalement d'obtenir des nano-particules et d'empêcher la formation des agglomérats.

## BRÈVE DESCRIPTION DES DESSINS

**Figure 1:** est une représentation schématique d'une particule de $Li_4Ti_5O_{12}$ à enrobage simple de carbone telle qu'obtenue par mise en oeuvre du procédé de synthèse décrit dans WO 02/46101 A2.

**Figure 2:** est une représentation schématique d'un réseau simple de particules de $Li_4Ti_5O_{12}$ à enrobage simple de carbone telles qu'obtenues par mise en oeuvre du procédé de synthèse décrit dans WO 02/46101 A2.

**Figure 3:** est une représentation schématique d'un réseau de particules, selon la présente invention, comportant un noyau de $Li_4Ti_5O_{12}$ et un enrobage hybride de carbone C1 et de carbone graphite C2.

**Figure 4:** met en évidence le rôle bénéfique du Carbone 2 avec orientation du carbone, lors d'un calandrage.

**Figure 5:** illustre un dispositif de type High Energy Ball Milling utilisé pour la préparation de particules selon l'invention ayant un noyau de $Li_4Ti_5O_{12}$.

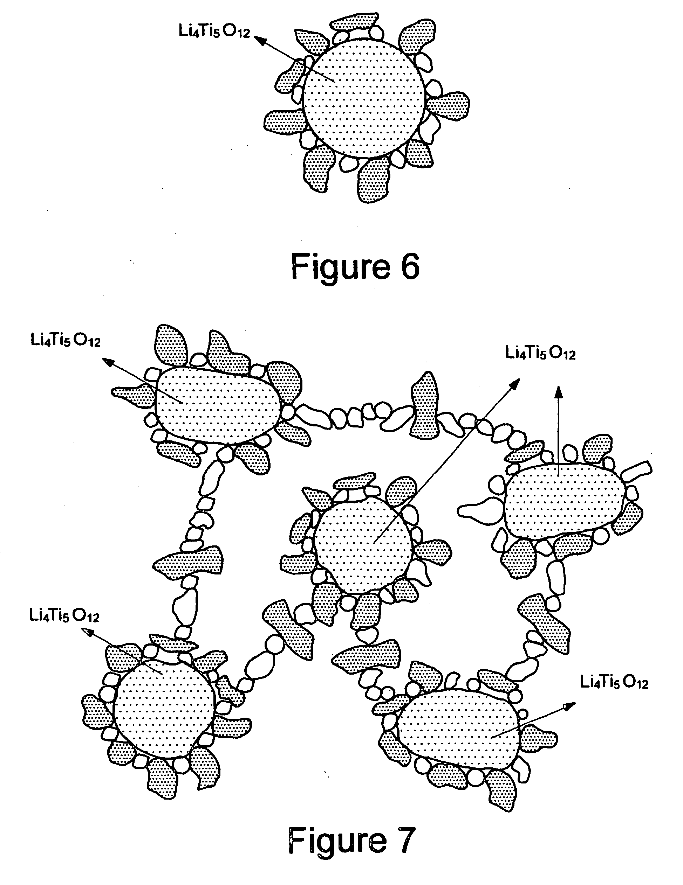

**Figure 6:** représente de façon schématique une particule dont le noyau est constitué de $Li_4Ti_5O_{12}$, enrobée selon un mode de réalisation de la présente invention, dans lequel l'enrobage hybride conducteur mixte est constitué de particules de graphite et de noir de Kejen.

**Figure 7:** représente de façon schématique un mélange de particules selon la Figure 6 et le réseau de conductivité créé au niveau de ces particules par des chaînes hybrides conductrices à base de graphite et de noir de Kejen.

## RÉSUMÉ DE L'INVENTION

La présente invention a trait à un mélange de particules comprenant un noyau non-conducteur ou semi-conducteur. Les noyaux de ces particules sont recouverts d'un enrobage hybride conducteur, et des chaînes conductrices hybrides situées entre les particules du mélange y constituent un réseau de conductivité.

Ces mélanges de particules peuvent être préparées par des procédés comportant au moins la préparation d'un mélange d'au moins un matériau non-conducteur ou semi-conducteur avec un matériau conducteur, puis l'ajout d'un deuxième matériau conducteur au mélange obtenu; ou au moins la préparation d'un mélange d'au moins un matériau non-conducteur ou semi-conducteur avec au moins deux matériaux conducteurs; ou au moins la préparation d'un mélange de matériaux conducteurs puis son mélange avec au moins un matériau non-conducteur ou semi-conducteur.

Du fait d'une très bonne conductivité du réseau, d'une faible résistivité, d'une très bonne capacité à haut courant et/ou d'une bonne densité d'énergie, ces particules sont avantageusement incorporées dans des anodes et dans des cathodes de générateurs électrochimiques, résultant en des systèmes électrochimiques hautement performants.

## DESCRIPTION DE L'INVENTION

**Le premier objet** de la présente invention est constitué par un mélange de particules selon la revendication 1.

La conductivité électrique, c'est-à-dire l'aptitude d'une substance à conduire un courant électrique peut être définie comme l'inverse de la résistivité par la formule suivante:

$$\sigma = 1/\rho$$

Comme l'intensité d'un champ électrique dans un matériau peut être exprimée par la formule $E = V/l$, la loi Ohm's peut être réécrite dans les termes de courants de densité $J - I/A$ et on arrive alors à la formule $J = \sigma E$.

Il est par ailleurs bien connu que la conductivité électronique varie suivant les matériaux utilisés selon un ordre d'amplitude de 27. On divise ainsi les matériaux comme en 3 grandes familles:

- les métaux conducteurs tel que $\sigma > 10^5$ $(\Omega.m)^{-1}$;
- les semis conducteurs avec $10^{-6} < \sigma < 10^5$ $(\Omega.m)^{-1}$ ;
- les isolants tels que $\sigma < 10^6$ $(\Omega.m)^{-1}$.

Ces grandes familles sont celles auxquelles il est fait référence dans le cadre de la présente demande.

L'oxyde de lithium est enrobé ou non de carbone et de préférence l'oxyde de lithium présente une structure spinelle.

Des mélanges de particules particulièrement intéressants sont ceux dans lesquels l'oxyde de lithium est choisi dans le groupe constitué par les oxydes de formule:

- $Li_4Ti_5O_{12}$ ;
- $Li_{(4-\alpha)}Z_\alpha Ti_5O_{12}$, dans laquelle $\alpha$ est supérieur à 0 et inférieur ou égal à 0,33; et
- $Li_4Z_\beta Ti_{(5-\beta)}O_{12}$ dans lequel $\beta$ est supérieur à 0 et /ou inférieur ou égal à 0,5,

Z représentant une source d'au moins un métal choisi de préférence dans le groupe constitué par Mg, Nb, Al, Zr, Ni, et Co.

De préférence, le noyau de ces particules est constitué pour au moins 65 %, de $Li_4Ti_5O_{12}$, de $Li_{(4-\alpha)}Z_\alpha Ti_5O_{12}$, de $L_{i4}Z_\beta Ti_{(5-\beta)}O_{12}$ ou d'un mélange de ces derniers, les paramètres $\alpha$ et $\beta$ étant tels que précédemment définis.

Une sous famille particulièrement intéressante de mélanges de particules selon l'invention est constituée par les mélanges dans lesquels le noyau des particules est constitué de $Li_4Ti_5O_{12}$, de $Li_{(4-\alpha)}Z_\alpha Ti_5O_{12}$, de $Li_4Z_\beta Ti_{(5-\beta)}O_{12}$ ou d'un mélange de deux ou de plusieurs de ces derniers, avec $\alpha$ et $\beta$ étant tels que précédemment définis.

L'enrobage hybride comprend avantageusement au moins deux formes différentes du carbone, ci-après appelées Carbone 1 et Carbone 2.

Le Carbone 1 est alors avantageusement un carbone à faible cristallinité. La cristallinité des particules de Carbone 1 présentes dans les mélanges de particules objet de l'invention, est caractérisée par un $d_{002}$, mesuré par diffraction des rayons-X ou par spectroscopie Raman, supérieur à 3,39 Angstroms.

Le Carbone 2 est habituellement de type graphite et/ou de type carbone à haute cristallinité. La cristallinité des particules de Carbone 2, mesurée par diffraction des rayons-X ou par spectroscopie Raman, est caractérisée par un $d_{002}$ inférieur à 3,36 Angstroms. De préférence, le Carbone 2 est de type graphite naturel, graphite artificiel ou graphite exfolié.

Le Carbone 2 est avantageusement choisi de façon à présenter une surface spécifique mesurée selon la méthode BET, qui est inférieure ou égale à 50 $m^2/g$ et/ou une taille moyenne variant de 2 à 10 micromètres.

On obtient aussi des propriétés électrochimiques particulièrement intéressantes pour des mélanges de particules dans lesquels le Carbone 2 est constitué d'au moins un graphite choisi dans le groupe des graphites artificiels, des graphites naturels, des graphites exfoliés ou des mélanges de ces graphites.

Le Carbone 1 est avantageusement choisi de façon à présenter une surface spécifique, mesurée selon la méthode BET, supérieure ou égale à 50 $m^2/g$.

Une sous-famille préférentielle de mélange de particules selon l'invention est constituée par les mélanges comportant des particules de Carbone 1 présentant une taille variant de 10 à 999 nanomètres.

De préférence, le pourcentage en masse de Carbone 1 représente, dans l'enrobage composé de Carbone 1 et de Carbone 2, de 1 à 10 %, et, il est de préférence sensiblement identique à la quantité de Carbone 2.

Les sous-familles constituées par les mélanges de poudres dans lesquels le diamètre moyen du noyau des particules, mesurée à l'aide du microscope électronique à balayage, varie de 50 nanomètres à 50 micromètres, est de préférence compris entre 4 et 10 micromètres, plus préférentiellement encore le diamètre moyen des particules et de l'ordre de 2 micromètres sont d'un intérêt particulier dans le cadre d'applications dans les systèmes électrochimiques.

Ces mélanges de particules sont caractérisés par au moins une des propriétés suivantes: une très bonne conductivité locale, une très bonne conductivité du réseau, une faible résistivité, une très bonne capacité à haut courant et une bonne densité d'énergie.

Ainsi la conductivité locale des mélanges de particules selon l'invention est habituellement, mesurée selon la méthode à quatre points, supérieure à $10^{-6}$ (Ohm-m)$^{-1}$ et elle est de préférence supérieure ou égale à $10^{-5}$ (Ohm-m)$^{-1}$.

La conductivité de réseau, quant à elle, mesurée selon la méthode à quatre points, se situe habituellement entre $2,6 \times 10^{-3}$ et $6.2 \times 10^{-3}$ (Ohm-m)$^{-1}$, et elle est de préférence inférieure à $6,0 \times 10^{-3}$ (Ohm-m).

Selon un mode avantageux, les poudres de l'invention ont une D50 d'environ 7 micromètres.

**Un deuxième objet de la présente invention** est constitué par les procédés de préparation de mélanges de particules conformes au premier objet de la présente invention. Ces procédés comprennent avantageusement au moins une des étapes suivantes:

-a) la préparation d'un mélange d'au moins un matériau non-conducteur ou semi-conducteur avec un matériau conducteur, puis l'ajout d'un deuxième matériau conducteur au mélange obtenu;

-b) la préparation d'un mélange d'au moins un matériau non-conducteur ou semi-conducteur avec au moins deux matériaux conducteurs; et

-c) la préparation d'un mélange de matériaux conducteurs puis son mélange avec au moins un matériau non-conducteur ou semi-conducteur.

Selon un mode avantageux de mise en oeuvre des procédés de l'invention, le mélange de matériaux est réalisé par broyage mécanique de type HEBM, Jar milling (broyeur à gallets), Vapor jet milling et de préférence par HEBM. Ces procédés sont habituellement mis en oeuvre à une température inférieure à 300 degrés Celsius, de préférence à une température comprise entre 20 et 40° Celsius, plus préférentiellement encore à température ambiante.

En effet des températures de synthèse trop élevées sont susceptibles de dégrader la structure des particules, notamment de les déformer de façon irréversible notamment par production de $CO_2$ à partir du carbone réactionnel.

Selon une autre variante, le mélange des carbones est réalisé par voie chimique avant l'étape de synthèse de $Li_4Ti_5O_{12}$.

Selon une autre alternative, l'un des matériaux conducteurs (Carbone 1) est obtenu par traitement thermique d'un précurseur de type polymère. Le polymère peut alors être choisi dans le groupe constitué par les polymères naturels et par les polymères naturels modifiés ainsi que par les mélanges de ces derniers.

Ainsi, à titre d'exemple de polymère utilisables pour la préparation des mélanges de particules de l'invention, on peut mentionner les sucres, les sucres modifiés chimiquement, les amidons, les amidons modifiés chimiquement, les amidons gélatinisés, les amidons modifiés chimiquement, les amidons modifiés chimiquement et gélatinisés, les celluloses, les celluloses modifiées chimiquement et les mélanges de ces derniers. À titre d'exemple préférentiel, on mentionne l'acétate de cellulose.

Le mélange de carbones introduits dans le milieu réactionnel peut être également réalisé par mélange physique, après la synthèse de $Li_4Ti_5O_{12}$.

**Un troisième objet** de la présente invention est constitué par les cathodes, notamment les cathodes de générateurs électrochimiques (de préférence de générateurs électrochimiques de type recyclables) comprenant un mélange de particules telles que celles définies dans le premier objet de la présente invention et/ou de particules susceptibles d'être obtenues par un procédé selon le deuxième objet de la présente invention.

**Un quatrième objet** de la présente invention est constitué par les anodes de générateur électrochimique (de préférence de générateurs électrochimiques recyclables) comprenant des particules telles que celles définies dans le premier objet de la présente invention et/ou des particules susceptibles d'être obtenues par un procédé selon le troisième objet de la présente invention.

**Un cinquième objet** de la présente invention est constitué par les générateurs électrochimiques de type lithium comportant au moins un électrolyte, au moins une anode de type lithium métallique et au moins une cathode de type $Li_4Ti_5O_{12}$ et/ou $Li_{(4-\alpha)}Z_\alpha Ti_5O_2$ et/ou $Li_4Z_\beta Ti_{(5-\beta)}O_{12}$, la cathode dans ledit générateur étant telle que définie dans le troisième objet de la présente invention.

Ces générateurs sont avantageusement de type rechargeable et/ou recyclable.

D'un intérêt particulier, parmi ces générateurs électrochimiques, sont ceux de type lithium ion comprenant une anode est telle que définie dans le quatrième objet de l'invention, de préférence une anode de type $Li_4Ti_5O_{12}$ et/ou de type $Li_{(4-\alpha)}Z_\alpha Ti_5O_{12}$ et/ou de type $Li_4Z_\beta Ti_{(5-\beta)}O_{12}$ et une cathode de type $LiFePO_4$, $LiCoO_2$, $LiMn_2O_4$ et/ou $LiNiO_2$.

De préférence, dans ces générateurs, l'anode et/ou la cathode sont équipées d'un collecteur de courant d'aluminium plein ou de type Exmet (expanded metal).

De tels générateurs électrochimiques présentent en général l'intérêt de ne nécessiter aucune formation préalable de la batterie. Avantageusement, dans ces générateurs, l'électrolyte est de nature polymère sec, gel, liquide ou céramique.

**Un sixième objet** de la présente invention est constitué par les supercapaciteurs de type hybride comprenant au moins un électrolyte, au moins une anode telle que définie dans le quatrième objet de l'invention, de préférence une anode de type $Li_4Ti_5O_{12}$ et/ou de type $Li_{(4-\alpha)}Z_\alpha Ti_5O_{12}$ et/ou $Li_4Z_\beta Ti_{(5-\beta)}O_{12}$ et une cathode de type graphite ou carbone à grande surface spécifique.

Ces supercapaciteurs ne nécessitent habituellement aucune formation préalable du supercapaciteur.

De préférence, les supercapaciteurs de l'invention sont tels que l'anode et/ou la cathode sont équipées d'un collecteur de courant d'aluminium plein ou de type Exmet (expanded metal).

Avantageusement, également dans ces supercapaciteurs, l'électrolyte est de nature polymère sec, gel, liquide ou céramique.

Les systèmes électrochimiques selon l'invention présentent, en outre, l'intérêt de pouvoir être préparés sans aucune addition d'autre carbone.

## Description de modes préférentiels de réalisation de l'invention:

### 1- Addition des particules de carbone constitutive de l'enrobage hybride après la synthèse à partir de $Li_4Ti_5O_{12}$

Le $Li_4Ti_5O_{12}$ est obtenu à partir d'un mélange binaire de $TiO_2$ et de $Li_2CO_3$ calciné à 850°C pendant 18 heures. Le $Li_4Ti_5O_{12}$ obtenu est alors mélangé avec deux types différents de carbones : un Carbone 1 aussi nommé C1 et un Carbone 2 aussi nommé C2.

Carbone 1: il s'agit d'un carbone à faible cristallinité et ayant, de préférence, une surface spécifique BET $\geq 50$ $m^2/g$. Le Carbone 1 peut être un noir de carbone, ou tout autre type d'additif conducteur.

Carbone 2: il s'agit d'un carbone à haute cristallinité et ayant de préférence une surface BET $\leq 50$ $m^2/g$. Le carbone 2 peut être un graphite naturel ou un graphite artificiel, éventuellement exfolié.

### 2 - Rôle des deux carbones:

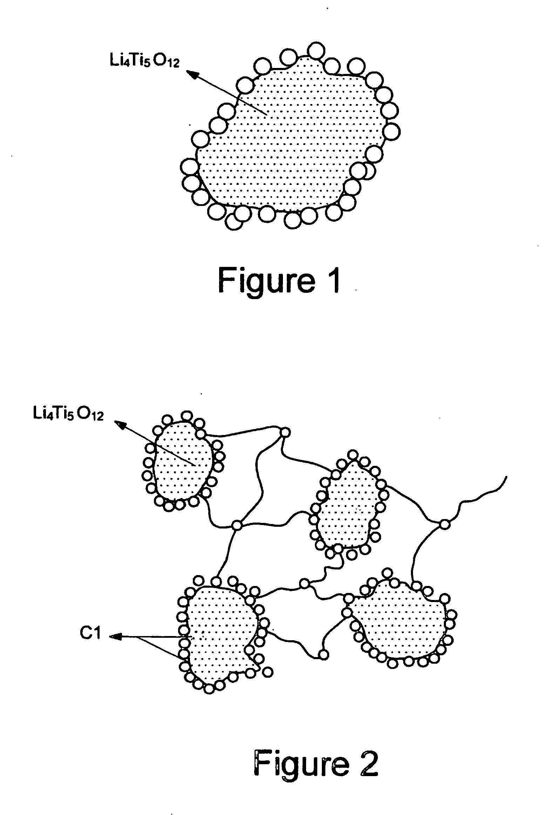

Carbone 1: Le rôle de ce carbone est double. Le premier est d'enrober la particule afin d'assurer une conductivité locale de la particule comme cela apparaît sur la Figure 1.

Le second rôle du carbone à faible cristallinité est de former un réseau de conductivité entre les particules du type de celles représentées dans la Figure 1, ce qui assure la conductivité au niveau de l'électrode. En effet, la préparation de l'électrode se fait sans aucun additif de carbone.

Le réseau électronique et la conductivité inter-particules sont aussi assurés par le Carbone 1 comme cela ressort également de la Figure 2.

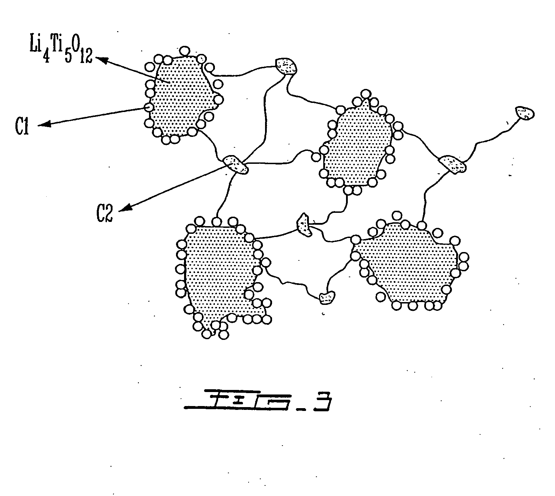

Carbone 2: Le carbone 2 est de type graphite et il permet tout d'abord, de façon surprenante, d'améliorer la conductivité de l'électrode en formant des noeuds constitutifs de stations de distribution homogène de la conductivité électrique. Ces stations apparaissent dans la représentation de la Figure 3.

La bonne conductivité électronique du graphite permet d'abaisser la résistivité de l'électrode, ce qui permet avantageusement à la batterie d'opérer à hautes densités de courant.

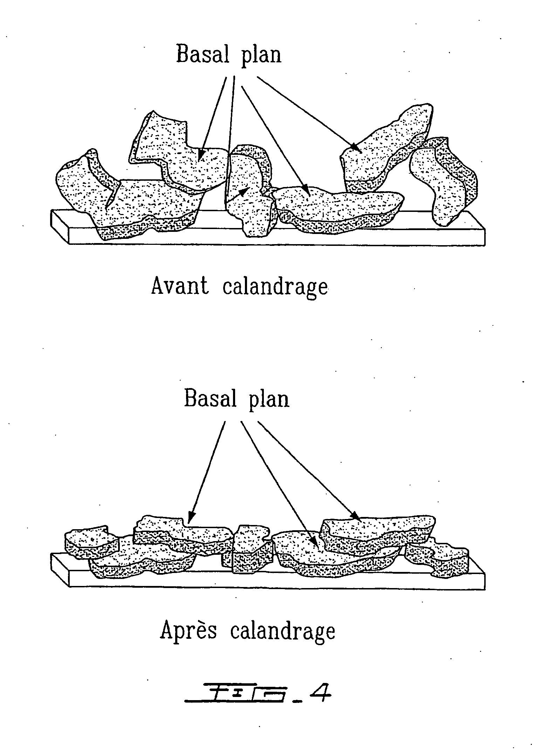

Le second rôle du graphite est au niveau du procédé. Le graphite possède les caractéristiques d'un matériau lubrifiant et hydrophobe. Durant l'épandage de l'électrode, le graphite permet de contrôler la porosité de l'électrode. Un tel calandrage des électrodes permet, de plus, d'orienter les particules vers le plan basal, comme cela apparaît sur la Figure 4, c'est-à-dire parallèlement à la surface du support de l'électrode; ce qui induit une conductivité maximale de l'électrode.

Lors du procédé d'extrusion, le graphite, en raison de ses propriétés lubrifiantes, assure la facilité d'extrusion ainsi que l'homogénéité de l'épaisseur de l'électrode. De plus, il augmente la vitesse d'extrusion. Ces avantages techniques résultent en un coût de production réduit des électrodes. De plus, le graphite, lorsqu'il est utilisé pour la préparation d'électrodes par voie sèche, aide à lubrifier le buse de l'extrudeuse et permet d'éviter le dépôt des métaux à la surface de la buse.

### 3 -Préparation de particules

**Mélange Ternaire:**

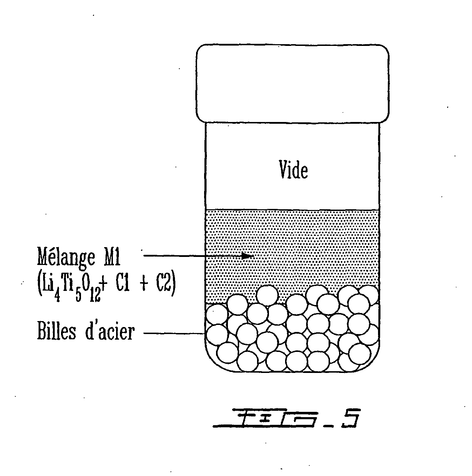

Selon un mode avantageux de réalisation de la présente invention, un mélange ternaire ($M_1$) ($Li_4Ti_5O_{12}$ + C1 + C2) est obtenu par broyage à haute énergie HEMB (High Energy Ball Mill). A cet effet, un creuset en métal est utilisé. Dans ce creuset, le mélange $M_1$ est introduit et des billes d'acier dans une proportion volumique 1/3, 1/3 et 1/3 de volume vide libre sont disposées dans le creuset comme représenté dans la Figure 5.

Les conditions de mélange par HEBM sont très importantes, l'une des plus cruciales est de ne pas détruire la.cristallinité du carbone C2. En effet, il ne faut pas réduire la taille de particule du carbone C2 en dessous de 1 micromètre.

### 4 - Préparation de l'électrode:

L'électrode est préparée à partir du mélange de $M_1$ et du PVDF. Ce mélange est réalisé dans un solvant ternaire N-méthylpyrrolydone (NMP), acétone, toluène) comme cela est décrit dans le brevet d'hydro-Québec WO 01/97303 A1 dont le contenu est incorporé par référence à la présente demande.

La conductivité de la pâte obtenue est assurée intrinsèquement par le mélange $M_1$ ($Li_4Ti_5O_{12}$ + $C_1$ + $C_2$), sans ajout de carbone additionnel ce qui a un impact positif sur la densité d'énergie de la batterie qui dans ce cas n'est pas pénalisée par le poids supplémentaire d'une autre source de carbone.

### 5 - Avantage de la synthèse de $Li_4Ti_5O_{12}$

Dans ce cas, le mélange quaternaire ($M_2$) comprend du $TiO_2$, du $Li_2CO_3$, du carbone C2 (graphite) et un précurseur de carbone (polymère ou autre).

Le mélange $M_2$ est alors introduit dans un creuset métallique. Un co-broyage de type HEBM est réalisé afin d'obtenir un mélange intime. Le mélange obtenu est ensuite placé dans un tube en quartz pour y être chauffé. La synthèse est alors finalisée en présence d'atmosphère inerte afin de carboniser le polymère.

Une fois la synthèse finie, le produit de $Li_4Ti_5O_{12}$ est enrobé de carbone à faible cristallinité et de graphite à haute cristallinité. La fabrication des électrodes est équivalente à celle décrite dans le paragraphe 4 ci-dessus.

### EXEMPLES

Les exemples suivants sont donnés à titre purement illustratif et ne sauraient être interprétés comme constituant une quelconque limitation de la définition de l'invention.

### Exemple 1:

Un mélange de $Li_4Ti_5O_{12}$, d'un noir de Ketjen et de graphite naturel d'origine brésilienne, dans un ratio volumique de 80,77/ 7,32/ 2,5 est broyé par HEBM pendant 1 heure. Des particules ayant un noyau de $Li_4Ti_5O_2$, d'une taille moyenne de 5 micromètres, et avec un enrobage hybride de graphite et de noir de Ketjen sont ainsi obtenues. Leur épaisseur moyenne est de 2 micromètres.

### Exemple 2:

Un mélange de $Li_4Ti_5O_{12}$, de noir de Ketjen et de graphite dans un ratio volumique de 40/2,5/2,5 est préparé selon la méthode décrite dans l'exemple précédent 1.

### Exemple 3 :

Un mélange de $Li_4Ti_5O_{12}$, de noir de Ketjen et de graphite dans un ratio volumique 81,06/ 3,51/ 2,5 est préparé comme dans l'exemple # 1 Le total massique de carbone ajouté correspond à environ 6% de la masse du mélange total.

Les mesures des performances électrochimiques des particules préparées sont rapportés dans le tableau I suivant.

Tableau 1

| Exemples | Taille des particules | Résistivité Ohm-m | Capacité à C/24 en mAh/g |
|---|---|---|---|
| **1** | 7 | $6 \times 10^{-3}$ | 165 |
| **2** | 7 | $2 \times 10^{-3}$ | 160 |
| **3** | 7 | $4 \times 10^{-3}$ | 162 |

Les niveaux élevés de propriétés électrochimiques mis en évidence notamment par ces exemples sont utilisés pour préparer des systèmes électrochimiques hautement performants.

**Revendications**

1. Mélange de particules comprenant un noyau non-conducteur ou semi-conducteur, lesdites particules étant **caractérisées en ce que :**

    - les noyaux desdites particules sont au moins partiellement recouverts d'un enrobage hybride conducteur et lesdites particules sont au moins partiellement interconnectées par des chaînes hybrides conductrices qui créent un réseau de conductivité électrique,
    - les noyaux desdites particules sont constitués majoritairement, et de préférence pour au moins 70 % en poids, d'au moins un oxyde de lithium choisi dans le groupe constitué par les oxydes de formule :

        * $Li_4Ti_5O_{12}$ ;
        * $Li_{(4-\alpha)}Z_\alpha Ti_5O_{12}$, dans laquelle $\alpha$ est supérieur à 0 et inférieur ou égal à 0,33, Z représentant une source d'au moins un métal; et
        * $Li_4Z_\beta Ti_{(5-\beta)}O_{12}$ dans lequel $\beta$ est supérieur à 0 et/ou inférieur ou égal à 0,5, Z représentant une source d'au moins un métal;

    - l'enrobage hybride conducteur est constitué par deux formes conductrices différentes du carbone, sous formes particulaires, l'une des forme, désignée par Carbone 1, étant un carbone à faible cristallinité **caractérisée par** un $d_{002}$ supérieur à 3,36 Å, et l'autre forme, désignée par Carbone 2, étant un graphite (c'est-à-dire une forme de carbone ayant une cristallinité élevée **caractérisée par** un $d_{002}$ inférieur à 3,36 Å,
    - le Carbone 1 couvre entre 50 et 90 %; et
    - le Carbone 2 est constitué de particules dont de 10 à 50% sont connectées entre elles pour former le réseau de conductivité électrique.

2. Mélange de particules selon la revendication 1, dans lequel le noyau des particules est constitué d'un mélange d'au moins deux des oxydes $Li_4Ti_5O_{12}$, $Li_{(4-\alpha)}Z_\alpha Ti_5O_{12}$, et de $Li_4Z_\beta Ti_{(5-\beta)}O_{12}$, $\alpha$ et $\beta$ ayant les valeurs définies dans la revendication 1.

3. Mélange de particules selon l'une quelconque des revendications 1 à 2, dans lequel Z représente un métal choisi dans le groupe constitué par Mg, Nb, Al, Zr, Ni et Co.

4. Mélange de particules selon la revendication 1, dans lequel les particules ont une $D_{50}$ de 7 micromètres.

5. Mélange de particules selon l'une quelconque des revendications 1 à 4, contenant de 1 à 6% en poids de carbone dans ledit mélange.

6. Mélange de particules selon la revendication 1, dans laquelle le Carbone 2 est un graphite naturel, un graphite artificiel ou un graphite exfolié, ou un de leurs mélanges.

7. Mélange de particules selon l'une quelconque des revendications 1 à 6, dans lequel le Carbone 1 possède une surface spécifique, mesurée selon la méthode BET, supérieure ou égale à 50 $m^2$/g.

8. Mélange de particules selon la revendication 7, dans lequel les particules de Carbone 1 ont une taille moyenne variant de 10 à 999 nanomètres.

**9.** Mélange de particules selon l'une quelconque des revendications 1 à 8, dans lequel les particules de Carbone 2 ont une surface spécifique mesurée selon la méthode BET, inférieure ou égale à 50 $m^2$/grammes.

**10.** Mélange de particules selon l'une quelconque des revendications 1 à 9, dans lequel les particules de Carbone 2 ont une taille variant de 2 à 10 micromètres.

**11.** Mélange de particules selon l'une quelconque des revendications 1 à 10, dans lequel le pourcentage en masse de Carbone 1 représente de 1 à 10 % de la masse totale de l'enrobage composé de Carbone 1 et de Carbone 2.

**12.** Mélange de particules selon l'une quelconque des revendications 1 à 11, dans lequel la quantité de Carbone 1 est sensiblement identique à la quantité de Carbone 2.

**13.** Mélange de particules selon l'une quelconque des revendications 1 à 12, dans lequel le diamètre moyen du noyau desdites particules varie de 50 nanomètres à 30 micromètres.

**14.** Mélange de particules selon la revendication 13, **caractérisée en ce que** le diamètre moyen dudit noyau est de l'ordre de 2 micromètres.

**15.** Mélange de particules selon l'une quelconque des revendications 1 à 14 dans lequel la taille moyenne desdites particules, mesurée selon la méthode du microscope électronique à balayage, est comprise entre 4 et 30 micromètres.

**16.** Mélange de particules selon l'une des revendications 1 à 15, présentant une conductivité locale, mesurée selon la méthode à quatre points, qui est supérieure à $10^{-6}$ (Ohm-m)$^{-1}$ et de préférence supérieure ou égale à $10^{-5}$ (Ohm-m)$^{-1}$.

**17.** Mélange de particules selon l'une des revendications 1 ou 16 présentant une conductivité de réseau, mesurée selon la méthode à quatre points, qui est comprise entre 2,6x $10^{-3}$ et 6,2x$10^{-3}$ (Ohm-m)$^{-1}$.

**18.** Procédé de préparation d'un mélange de particules telles que définies dans l'une quelconque des revendications 1 à 17, comprenant la préparation d'un mélange d'au moins un matériau non-conducteur ou semi-conducteur avec au moins deux matériaux conducteurs;,

- l'opération de mélange des matériaux étant réalisée par un broyage mécanique choisi parmi les broyages HEBM, Jar milling, ou Vapor jet milling, à une température inférieure à 300 °Celsius,
- les matériaux conducteurs Carbone 1 et Carbone 2 étant sous forme particulaire, et
- le matériau non conducteur étant constitué par les oxydes de formule:

* $Li_4Ti_5O_{12}$ ;
* $Li_{(4-\alpha)}Z_\alpha Ti_5O_{12}$, dans laquelle $\alpha$ est supérieur à 0 et inférieur ou égal à 0,33, Z représentant une source d'au moins un métal; et
* $Li_4Z_\beta Ti_{(5-\beta)}O_{12}$ dans lequel $\beta$ est supérieur à 0 et/ou inférieur ou égal à 0,5, Z représentant une source d'au moins un métal.

**19.** Procédé selon la revendication 18, réalisé à une température comprise entre 20 et 40 degrés Celsius, plus préférentiellement encore à température ambiante.

**20.** Cathode de générateur électrochimique comprenant un mélange de particules telles que celles définies dans l'une quelconque des revendications 1 à 17.

**21.** Anode de générateur électrochimique comprenant des particules telles que celles définies dans l'une quelconque des revendications 1 à 17.

**22.** Générateur électrochimique de type lithium comportant au moins une anode de type lithium métallique et au moins une cathode selon la revendication 20.

**23.** Générateur électrochimique selon la revendication 22, de type rechargeable.

**24.** Générateur électrochimique de type lithium ion comprenant au moins un électrolyte, au moins une anode selon la revendication 21, et au moins une cathode de type LiFePO$_4$, LiCoO$_2$, LiMn$_2$O$_4$ et/ou LiNiO$_2$.

**25.** Générateur électrochimique selon l'une quelconque des revendications 22 à 24, dont au moins une anode et/ou au moins une cathode sont équipées d'un collecteur de courant d'aluminium plein ou de type Exmet (expanded metal).

**26.** Générateur selon l'une quelconque des revendications 22 à 25, dans lequel l'électrolyte est de nature polymère sec, gel, liquide ou céramique.

**27.** Supercondensateur de type hybride comprenant au moins un électrolyte, au moins une anode selon la revendication 21 et au moins une cathode de type graphite ou carbone à grande surface spécifique, ne demandant aucune formation préalable du supercondensateur.

**28.** Supercondensateur selon la revendication 27, dans lequel au moins une anode et/ou au moins une cathode sont équipées d'un collecteur de courant d'aluminium plein ou de type Exmet (expanded metal).

**29.** Supercondensateur selon la revendication 27, dans lequel l'électrolyte est de nature polymère sec, gel, liquide ou céramique.

**Claims**

**1.** Mixture of particles comprising a non-conducting or semi-conducting nucleus, wherein

- the nuclei of said particles are at least partially covered with a hybrid conducting coating and said particles are at least partially connected through hybrid conducting chains which provide a network of electrical conductivity,
- the nuclei of said particles are mainly comprised of, and preferably at least of 70% w/w of, at least one lithium oxide selected from the group consisting of:

* Li$_4$Ti$_5$O$_{12}$;
* Li$_{4-\alpha}$Z$_\alpha$Ti$_5$O$_{12}$, in which a is higher than 0 and lower than or equal to 0.33, Z represents a source of at least one metal; and
* Li$_4$Z$_\beta$Ti$_{5-\beta}$O$_5$ in which $\beta$ is higher than 0 and/or lower than or equal to 0.5, Z represents a source of at least one metal;

- the hybrid conducting coating comprises two different conducting forms of carbon, in particulate form, one of them designated Carbon 1 being is a low crystallinity carbon **characterized by** a d$_{002}$ higher than 3.36Å, an the other designated Carbon 2 being graphite (i.e. a carbon having a high crystallinity **characterized by** a d$_{002}$ lower than 3.36 Å),
- Carbon 1 covers from 50 to 90%, and
- Carbon 2 consists of particles 10 to 50% of which are connected to form the electrically conducting net.

**2.** A mixture of particles according to claim 1, in which the nucleus of the particles consists of a mixture of at least two oxides selected from Li$_4$Ti$_5$O$_{12}$, Li$_{4-\alpha}$Z$_\alpha$Ti$_5$O$_{12}$, and Li$_4$Z$_\beta$Ti$_{5-\beta}$O$_{12}$, $\alpha$ and $\beta$ having the values defined in claim 1.

**3.** A mixture of particles according to claim 1 or 2, in which Z represents a metal selected from the group consisting of Mg, Nb, Al, Zr, Ni and Co.

**4.** A mixture of particles according to claim 1, in which the particles have a D$_{50}$ of 7 micrometers.

**5.** A mixture of particles according to any of claims 1 to 4 containing from 1 to 6% by weight of carbon in said mixture.

**6.** A mixture of particles according to claim 1, in which Carbon 2 is a natural graphite, a synthetic graphite or an exfoliated graphite, or a mixture thereof.

**7.** A mixture of particles according to any of claims 1 to 6, in which Carbon 1 has a specific surface area, measured according to the BET method, that is higher than or equal to 50 m$^2$/g.

8. A mixture of particles according to claim 7, in which the particles of Carbon 1 have an average size that varies from 10 to 999 nanometers.

9. A mixture of particles according to any of claims 1 to 8, in which the particles of Carbon 2 have a specific surface area measured according to the BET method, that is lower than or equal to 50 $m^2$/g.

10. A mixture of particles according to any of claims 1 to 9, in which the particles of carbon 2 have a size that varies from 2 to 10 micrometers.

11. A mixture of particles according to any of claims 1 to 10, in which the weight percentage of Carbon 1 represents from 1 to 10% of the total weight of the coating composed of Carbon 1 and Carbon 2.

12. A mixture of particles according to any of claims 1 to 11, in which the quantity of Carbon 1 is substantially identical to the quantity of Carbon 2.

13. A mixture of particles according to any of claims 1 to 12, in which the average diameter of the nucleus of said particles varies from 50 nanometers to 30 micrometers.

14. A mixture of particles according to claim 13, **characterized in that** the average diameter of said nucleus is of the order of 2 micrometers.

15. A mixture of particles according to any of claims 1 to 14, in which the average size of said particles, measured according to the electronic scanning microscope method, is between 4 and 30 micrometers.

16. A mixture of particles according to any of claims 1 to 15, having a local conductivity, measured according to the four point method, that is higher than $10^{-6}$ (Ohm-m)$^{-1}$, preferably higher than or equal to $10^{-5}$ (Ohm-m)$^{-1}$.

17. A mixture of particles according to any of claims 1 to 16, having a network conductivity, measured according to the four point method, that is between $2.6 \times 10^{-3}$ and $6.2 \times 10^{-3}$ (Ohm-m)$^{-1}$.

18. A method for preparing a mixture of particles such as defined in any of claims 1 to 17, comprising a step of preparation of a mixture of at least one non-conducting or semi-conducting material with at least two conducting materials, wherein:

   - mixing of materials is carried out by mechanical crushing selected from HEBM, Jar milling, or Vapor jet milling, at a temperature lower than 300°C;
   - the conducting materials Carbon 1 and Carbon 2 are in particulate form;
   - the non conducting material consists of oxides of formulae

      * $Li_4Ti_5O_{12}$;
      * $Li_{4-\alpha}Z_\alpha Ti_5O_{12}$, in which a is higher than 0 and lower than or equal to 0.33, Z represents a source of at least one metal; and
      * $Li_4Z_\beta Ti_{5-\beta}O_5$ in which β is higher than 0 and/or lower than or equal to 0.5, Z represents a source of at least one metal.

19. The method according to claim 18, which is a carried on at a temperature between 20°C and 40°C, preferably at normal temperature.

20. Cathode for an electrochemical generator comprising a mixture of particles such as those defined in any of claims 1 to 17.

21. Anode for an electrochemical generator comprising particles such as those defined in any of claims 1 to 17.

22. Electrochemical generator of the lithium type including at least one metallic lithium anode and at least one cathode as defined in claim 20.

23. Electrochemical generator according to claim 22, of the rechargeable type.

24. Electrochemical generator of the lithium type including at least one electrolyte, at least one anode according to claim 21, at least one cathode which is of the $LiFePO_4$, $LiCoO_5$, $LiMn_5O_4$ and/or $LiNiO_5$ type.

25. Electrochemical generator according to any of claims 22 to 24, in which at least one anode and/or at least one cathode are provided with an aluminum current collector that is full or of the Exmet type (expanded metal).

26. Generator according to any of claims 22 to 25 in which the electrolyte is a dry polymer, a gel, a liquid or a ceramic.

27. Hybrid type supercapacitor comprising at least one electrolyte, at least one anode according to claim 21, and at least one cathode of the graphite or large surface area carbon type, requiring no previous preparation of the supercapacitor.

28. Supercapacitor according to claim 27, in which at least one anode and/or at least one cathode are provided with an aluminum current collector that is full or of the Exmet type (expanded metal).

29. Supercapacitor according to claim 27, in which the electrolyte is a dry polymer, a gel, a liquid or a ceramic.

**Patentansprüche**

1. Teilchengemisch, das einen nichtleitenden oder halbleitenden Kern umfasst, wobei die Teilchen **dadurch gekennzeichnet sind, dass**:

   - die Kerne der Teilchen zumindest teilweise mit einer hybridleitfähigen Ummantelung bedeckt sind und die Teilchen zumindest teilweise über hydridleitfähige Ketten miteinander verbunden sind, die ein elektrisch leitfähiges Netzwerk bilden,
   - die Kerne der Teilchen großteils und vorzugsweise zu zumindest 70 Gew.-% aus zumindest einem Lithiumoxid bestehen, das aus der aus Oxiden der folgenden Formeln bestehenden Gruppe ausgewählt ist:

     * $Li_4Ti_5O_{12}$;
     * $Li_{(4-\alpha)}Z_\alpha Ti_5O_{12}$, worin $\alpha$ größer als 0 und kleiner oder gleich 0,33 ist und Z für eine Quelle zumindest eines Metalls steht; und
     * $Li_4Z_\beta Ti_{(5-\beta)}O_{12}$, worin $\beta$ größer als 0 und/oder kleiner oder gleich 0,5 ist und Z für eine Quelle zumindest eines Metalls steht;

   - die hybridleitfähige Ummantelung aus zwei unterschiedlichen leitfähigen Formen von Kohlenstoff in Teilchenform besteht, wobei eine der Formen, die als Kohlenstoff 1 bezeichnet wird, ein Kohlenstoff ist, der eine geringe Kristallinität aufweist, die durch einen $d_{002}$-Wert von mehr als 3,36 Å **gekennzeichnet** ist, und die andere Form, die als Kohlenstoff 2 bezeichnet wird, ein Graphit ist (d.h. eine Form von Kohlenstoff mit erhöhter Kristallinität, die durch einen $d_{002}$-Wert von weniger als 3,36 Å **gekennzeichnet** ist);
   - Kohlenstoff 1 zu zwischen 50 und 90 % bedeckt ist und
   - Kohlenstoff 2 aus Teilchen besteht, von denen 10 bis 50 % untereinander verbunden sind, um ein elektrisch leitfähiges Netzwerk zu bilden.

2. Teilchengemisch nach Anspruch 1, worin der Teilchenkern aus einem Gemisch aus zumindest zwei Oxiden $Li_4Ti_5O_{12}$, $Li_{(4-\alpha)}Z_\alpha Ti_5O_{12}$ und $Li_4Z_\beta Ti_{(5-\beta)}O_{12}$ besteht, worin $\alpha$ und $\beta$ die in Anspruch 1 definierten Werte aufweisen.

3. Teilchengemisch nach einem der Ansprüche 1 und 2, worin Z für ein aus der aus Mg, Nb, Al, Zr, Ni und Co bestehenden Gruppe ausgewähltes Metall steht.

4. Teilchengemisch nach Anspruch 1, worin die Teilchen einen $D_{50}$-Wert von 7 $\mu$m aufweisen.

5. Teilchengemisch nach einem der Ansprüche 1 bis 4, das in dem Gemisch 1 bis 6 Gew.-% Kohlenstoff enthält.

6. Teilchengemisch nach Anspruch 1, worin der Kohlenstoff 2 ein natürlicher Graphit, ein künstlicher Graphit, ein delaminierter Graphit oder ein Gemisch davon ist.

7. Teilchengemisch nach einem der Ansprüche 1 bis 6, worin der Kohlenstoff 1 eine nach dem BET-Verfahren gemessene spezifische Oberfläche von 50 m$^2$/g oder mehr aufweist.

8.  Teilchengemisch nach Anspruch 7, worin die Kohlenstoff-1-Teilchen eine mittlere Größe von 10 bis 999 nm aufweisen.

9.  Teilchengemisch nach einem der Ansprüche 1 bis 8, worin die Kohlenstoff-2-Teilchen eine nach dem BET-Verfahren gemessene spezifische Oberfläche von 50 m$^2$/g oder weniger aufweisen.

10. Teilchengemisch nach einem der Ansprüche 1 bis 9, worin die Kohlenstoff-1-Teilchen eine mittlere Größe von 2 bis 10 $\mu$m aufweisen.

11. Teilchengemisch nach einem der Ansprüche 1 bis 10, worin der Massenanteil von Kohlenstoff 1 bis 10 % des Gesamtgewichts der aus Kohlenstoff 1 und Kohlenstoff 2 bestehenden Ummantelung beträgt.

12. Teilchengemisch nach einem der Ansprüche 1 bis 11, worin die Menge an Kohlenstoff 1 im Wesentlichen mit der Menge an Kohlenstoff 2 übereinstimmt.

13. Teilchengemisch nach einem der Ansprüche 1 bis 12, worin der mittlere Durchmesser des Kerns der Teilchen 50 nm bis 30 $\mu$m beträgt.

14. Teilchengemisch nach Anspruch 13, **dadurch gekennzeichnet, dass** der mittlere Durchmesser des Kerns in der Größenordnung von 2 $\mu$m liegt.

15. Teilchendurchmesser nach einem der Ansprüche 1 bis 14, worin die mittels Rasterelektronenmikroskopverfahren gemessene mittlere Größe der Teilchen zwischen 4 und 30 $\mu$m beträgt.

16. Teilchengemisch nach einem der Ansprüche 1 bis 15, das eine lokale Leitfähigkeit aufweist, die, nach dem 4-Punkt-Verfahren gemessen, mehr als $10^{-6}$ $(\Omega.m)^{-1}$ und vorzugsweise $10^{-5}$ $(\Omega.m)^{-1}$ oder mehr beträgt.

17. Teilchengemisch nach einem der Ansprüche 1 bis 16, das eine Netzwerkleitfähigkeit aufweist, die, nach dem 4-Punkt-Verfahren gemessen, zwischen $2{,}6 \times 10^{-3}$ und $6{,}2 \times 10^{-3}$ $(\Omega.m)^{-1}$ beträgt.

18. Verfahren zur Herstellung eines Teilchengemischs nach einem der Ansprüche 1 bis 17, das die Herstellung eines Gemischs aus zumindest einem nichtleitenden oder halbleitenden Material und zumindest zwei leitfähigen Materialien umfasst:

    - wobei das Vermischen der Materialien durch mechanisches Zerkleinern, ausgewählt aus hochenergetischem Kugelmahlen (High-Energy Ball Milling, HEBM), Kugelmahlen und Dampfstrahlmahlen, bei einer Temperatur von unter 300 °C erfolgt;
    - wobei die leitfähigen Materialien Kohlenstoff 1 und Kohlenstoff 2 in Teilchenform vorliegen; und
    - wobei das nichtleitende Material aus Oxiden der folgenden Formeln besteht:

    * $Li_4Ti_5O_{12}$;
    * $Li_{(4-\alpha)}Z_\alpha Ti_5O_{12}$, worin $\alpha$ größer als 0 und kleiner oder gleich 0,33 ist und Z für eine Quelle zumindest eines Metalls steht; und
    * $Li_4Z_\beta Ti_{(5-\beta)}O_{12}$, worin $\beta$ größer als 0 und/oder kleiner oder gleich 0,5 ist und Z für eine Quelle zumindest eines Metalls steht.

19. Verfahren nach Anspruch 18, das bei einer Temperatur zwischen 20 und 40 °C, noch bevorzugter bei Raumtemperatur, durchgeführt wird.

20. Kathode eines elektrochemischen Generators, die ein Teilchengemisch nach einem der Ansprüche 1 bis 17 umfasst.

21. Anode eines elektrochemischen Generators, die ein Teilchengemisch nach einem der Ansprüche 1 bis 17 umfasst.

22. Elektrochemischer Generator vom Lithiumtyp, der zumindest eine Anode vom Lithiummetalltyp und zumindest eine Kathode nach Anspruch 20 umfasst.

23. Elektrochemischer Generator nach Anspruch 22 vom wiederaufladbaren Typ.

24. Elektrochemischer Generator vom Lithiumionentyp, der zumindest einen Elektrolyt, zumindest eine Anode nach Anspruch 21 und zumindest eine Kathode vom LiFePO$_4$-, LiCoO$_2$-, LiMn$_2$O$_4$- und/oder LiNiO$_2$-Typ umfasst.

25. Elektrochemischer Generator nach einem der Ansprüche 22 bis 24, in dem zumindest eine Anode und/oder zumindest eine Kathode mit einem Stromabnehmer aus Vollaluminium oder vom Exmet- (Streckmetall-) Typ ausgestattet ist/sind.

26. Generator nach einem der Ansprüche 22 bis 25, worin der Elektrolyt ein trockener Polymerelektrolyt, ein Gelelektrolyt, ein flüssiger Elektrolyt oder ein Keramikelektrolyt ist.

27. Superkondensator vom Hybridtyp, der zumindest einen Elektrolyt, zumindest eine Anode nach Anspruch 21 und zumindest eine Kathode vom Graphit- oder Kohlenstofftyp mit großer spezifischer Oberfläche umfasst, wobei keine vorhergehende Ausbildung des Superkondensators erforderlich ist.

28. Superkondensator nach Anspruch 27, worin zumindest eine Anode und/oder zumindest eine Kathode mit einem Stromabnehmer aus Vollaluminium oder vom Exmet- (Streckmetall-) Typ ausgestattet ist/sind.

29. Superkondensator nach Anspruch 27, worin der Elektrolyt ein trockener Polymerelektrolyt, ein Gelelektrolyt, ein flüssiger Elektrolyt oder ein Keramikelektrolyt ist.

$Li_4Ti_5O_{12}$ →

# Figure 1

$Li_4Ti_5O_{12}$ →

C1 →

# Figure 2

$Li_4Ti_5O_{12}$

C1

C2

FIG. 3

Basal plan

Avant calandrage

Basal plan

Après calandrage

FIG _ 4

Mélange M1
($Li_4Ti_5O_{12}$+ C1 + C2)

Billes d'acier

Vide

_FIG_5

$Li_4Ti_5O_{12}$

Figure 6

$Li_4Ti_5O_{12}$

$Li_4Ti_5O_{12}$

$Li_4Ti_5O_{12}$

$Li_4Ti_5O_{12}$

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5521026 A
- WO 0246101 A2
- WO 0197303 A1